# EUROPÄISCHE PATENTSCHRIFT

(11) **EP 4 214 174 B1**
(45) Veröffentlichungstag und Bekanntmachung des Hinweises auf die Patenterteilung: **12.06.2024**
(21) Anmeldenummer: 21769480.1
(22) Anmeldetag: 08.09.2021
(51) Int. Cl.: C04B 7/12, C04B 7/47

(54) **ENERGIERÜCKGEWINNUNG BEI DER KÜHLUNG FARBOPTIMIERTER AKTIVIERTER TONE**
ENERGY RECOVERY IN THE COOLING OF COLOUR-OPTIMIZED ACTIVATED CLAYS
RÉCUPÉRATION D'ÉNERGIE DANS LE REFROIDISSEMENT D'ARGILES ACTIVES À COULEUR OPTIMISÉE

(30) Priorität: 21.09.2020 DE 102020211750; 21.09.2020 BE 202005646
(43) Veröffentlichungstag der Anmeldung: 26.07.2023
(73) Patentinhaber: thyssenkrupp Polysius GmbH, 59269 Beckum (DE); thyssenkrupp AG, 45143 Essen (DE)
(72) Erfinder: BRUNELOT, Patrick, 13016 Marseille (FR); GRUND, Guido, 59457 Werl (DE)
(74) Vertreter: thyssenkrupp Intellectual Property GmbH
(86) Internationale Anmeldenummer: PCT/EP2021/074635
(87) Internationale Veröffentlichungsnummer: WO 2022/058206

(56) Entgegenhaltungen:
- WO-A1-90/05586

## Beschreibung

Die Erfindung betrifft ein Verfahren zur optimalen Wärmerückgewinnung bei der Kühlung von farboptimierten aktivierten Tonen.

Beispielsweise in der Zementindustrie werden aktivierte Tone eingesetzt. Diese werden beispielweise bei einer Temperatur von 800 °C aktiviert. Ein für das fertige Produkt wichtiger Punkt ist, dass der Kunde üblicherweise in weißes oder maximal hellgraues Produkt erwartet, die verwendeten Tone jedoch oft Eisen oder Mangan enthalten. Bei den für die Aktivierung notwendigen Temperaturen werden diese Elemente innerhalb ihrer entsprechenden Mineralien aufoxidiert und weisen dann eine intensive rötliche Farbe auf. Daher werden diese aktivierten Tone entweder unter einer reduzierenden Atmosphäre erzeugt oder nach Aktivierung bei entsprechend hohen Temperaturen in einer reduzierenden Umgebung reduziert und dadurch entfärbt. Anschließend muss das Produkt wenigstens soweit abgekühlt werden, dass eine erneute Oxidation und damit Färbung an Umgebungsluft nicht mehr (wenigstens nicht mehr in optisch störendem Maße) stattfindet.

Als Zementersatzstoff beziehungsweise SCM wurde zum Beispiel kalzinierter Ton oder auch natürlich getemperte Puzzolane vorgeschlagen. Als kalzinierter Ton wird ein geeigneter, natürlich vorkommender Ton bezeichnet, der thermisch bei geeigneter Temperatur aktiviert wurde, so dass er puzzolanische Eigenschaften erhält. Hierfür geeignete Tone enthalten im Allgemeinen Tonminerale in Form von 1-Lagen und/oder 2-Lagen Schichtsilikate, zum Beispiel Kaolinit, Illit oder Montmorillonit. Zusätzlich können diese Tone noch Begleitminerale enthalten, wie zum Beispiel Quarz, Feldspäte, Kalzit, Dolomit, aber auch Metalloxide und -hydroxide oder speziell auch Eisenhydroxide. Natürlich vorkommende Tone sind oft eisenreich, und/oder enthalten andere farbgebende Metalle, so dass es bei der herkömmlichen Calcinierung beispielsweise zu einer rötlichen Verfärbung des Produktes kommt. Diese Färbung ist zwar für die Festigkeit und andere Baustoffeigenschaften nicht relevant, wird aber von Anlagenbetreibern und Baustoffkunden als unerwünscht eingestuft. Nach derzeitigem Stand hängt die Akzeptanz eines Baustoffes bei den Endverbrauchern, das heißt das Marktpotenzial der calcinierten Tone und somit das Potential zur möglichen CO₂-Einsparung aber wesentlich von deren Farbe ab.

Die Kalzinierung feinkörniger mineralischer Feststoffe, wie beispielsweise Ton, erfolgt herkömmlicher Weise in Drehrohröfen, Etagenöfen Wirbelschichtöfen oder Flugstromöfen. Hierdurch wird die Einhaltung einer erforderlichen, niedrigen Temperatur bei einer für die Behandlung bei diesem Verfahren notwendigen Verweilzeit gewährleistet.

So beschreibt die US 4,948,362 A ein Verfahren zur Kalzinierung von Ton, bei welchem Kaolinton zur Erhöhung des Glanzes und zur Minimierung der Abrasivität in einem Etagenröstofen mit Hilfe eines heißen Kalzinierungsgases behandelt wird. In einem elektrostatischen Filter wird das kalzinierte Tonpulver von dem Abgas des Kalzinierungsofens getrennt und weiterverarbeitet, um das gewünschte Produkt zu erhalten.

Derzeit werden vor allem zwei Methoden zur Kühlung eingesetzt. Bei einer ersten Methode wird Wasser zur Kühlung eingesetzt und es entsteht so Wasserdampf mit einer Temperatur um den Siedepunkt und unter Normaldruck. Bei einer zweiten Methode wird das Produkt in einer Schnecke mit Kühlwasser gekühlt, wobei Warmwasser mit etwa 60 °C entsteht. Beides sind Energieniveaus, in denen thermische Energie in einem Anlagenverbund nicht oder nur sehr schlecht genutzt werden kann.

Aus der WO 2015/104466 A1 ist die Herstellung von Zement mit einer mischenden Wärmebehandlung und Kühlung bekannt.

Aus der EP 3 218 320 B1 ist Verfahren zur Wärmebehandlung von natürlichen Tonen und/oder Zeolithen bekannt, wobei der Ton und/oder der Zeolith in der Calcinierzone in einem Flugstromcalcinator oder einer Wirbelschicht in einem Temperaturbereich von 350 bis 1050 °C unter reduzierenden Bedingungen calciniert wird, wobei während der Calcination unter reduzierenden Bedingungen eine Reduktion von rötlich färbendem dreiwertigen Eisen auf zweiwertiges Eisen stattfindet.

Aus der US 9 458 059 B2 ist ein Verfahren zur Herstellung synthetischer Puzzolane mit gewünschter Farbcharakteristik mit einer Kühlung unter reduzierenden Bedingungen bekannt.

Aus der DE 10 2011 014 498 B4 ist ein Verfahren zur Herstellung eines Klinkerersatzstoffes für die Verwendung bei der Zementherstellung bekannt, wobei eine thermische Behandlung des Tones unter reduzierenden Bedingungen bei einer Temperatur von 600 bis 1.000 °C sowie eine Zwischenkühlung des Reduktionsproduktes unter Sauerstoffabschluss auf eine Temperatur < 300 °C erfolgt.

Aus der DE 10 2008 020 600 B4 ist ein Verfahren zur Wärmebehandlung feinkörniger mineralischer Feststoffe bekannt, wobei die Feststoffe durch einen Flash-Reaktor hindurchgeführt werden, in welchem sie bei einer Temperatur von 450 bis 1500 °C und einer Verweilzeit zwischen 0,5 und 20 Sekunden, mit heißen Gasen in Kontakt gebracht werden, und wobei die Feststoffe anschließend bei einer Temperatur von 500 bis 890 °C durch einen Verweilzeitreaktor geführt werden, aus welchem sie nach einer Verweilzeit von 1 bis 600 Minuten abgezogen werden.

Aus der US 2012 / 160 135 A1 ist ein Verfahren zur Herstellung synthetischer Puzzolane mit gewünschten Farbeigenschaften mit einer Kühlung unter reduzierender Atmosphäre bekannt.

Aus der EP 3 615 489 A2 ist ein Verfahren zur Herstellung von grauen synthetischen Puzzolanen mit einer ersten raschen Kühlung unter 600 °C bekannt.

Aus der WO 2015 / 039 198 A1 ist ein Verfahren zur Herstellung einer Zubereitung zur partiellen Substitution von Portland-Zement mit grauer Farbe bekannt.

Aus der WO 90 / 05586 A1 ist eine Vorrichtung zum Calcinieren von Tonen in einer energiesparsamen Art bekannt.

Aufgabe der Erfindung ist es, die bei der Kühlung freiwerdende Energie auf einem in einem Anlagenverbund optimal nutzbaren Niveau zur Verfügung zu stellen und so möglichst umfangreich zurück zu gewinnen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zur Herstellung farboptimierter aktivierter Tone für die Zementherstellung weist die folgenden Schritte auf:
a) Thermische Aktivierung des Ausgangsmaterials bei erhöhter Temperatur zu einem aktivierten Ton,
b) Abkühlen des aktivierten Tons durch Vermengen mit einem im Produkt verbleibenden Feststoff von einer ersten Temperatur auf eine zweite Temperatur,
c) Abkühlen des Gemisches aus Schritt b) von der zweiten Temperatur auf eine dritte Temperatur durch Wärmeübertrag auf einen Gasstrom.

Hierbei wird als Feststoff in Schritt b) das Produkt nach Schritt c), ein Zementvorstoff aus der Gruppe umfassend Zementklinker, Gips, Kalk, Schlacke, Flugasche, Tone, insbesondere aktivierte Tone, oder einer Mischung hieraus, oder eine Kombination aus Produkt nach Schritt c) und einem Zementvorstoff eingesetzt.

Zementvorstoffe werden für die Vermahlung von Zement eingesetzt, Zement entsteht somit durch Vermischen und Vermahlen aus den Zementvorstoffen. Da auch der aktivierte Ton ein solcher Zementvorstoff ist kann dieser bereits bei der Herstellung mit weiteren Zementvorstoffen vermischt werden, da diese Vermischung zur Herstellung des Zements später ohnehin erfolgt. Bevorzugt ist der Zementvorstoff Zementklinker oder Kalk, ganz besonders bevorzugt Zementklinker.

Der Vorteil dieses erfindungsgemäßen Verfahrens ist es, dass der aktivierte Ton vergleichsweise einfach und schnell unter eine Temperatur gekühlt wird, bei der eine Aufoxidation und damit eine Einfärbung des Produktes nicht mehr zu befürchten ist. Gleichzeitig wird die Energie nicht wie zum Beispiel bei raschen Abkühlen mit Wasser auf ein nicht mehr nutzbares Niveau reduziert, sondern bleibt auf einem vergleichsweise hohen Niveau erhalten und kann dann durch den Wärmeübertrag auf einen Gasstrom in Schritt c) zurückgewonnen werden. Der in Schritt c) erwärmte Gasstrom wird vorzugsweise dann wieder in der thermischen Aktivierung des Tones eingesetzt. Beispielsweise kann der Gasstrom genutzt werden, um beispielsweise den Ton zu trocknen oder in einem Vorwärmer aufzuheizen. Beispielsweise kann der Gasstrom aus Luft, mit Sauerstoff angereicherter Luft oder aus Sauerstoff bestehen und beispielsweise einem Calcinator oder anderen Verbrennungsaggregaten als vorgewärmte Luft zur Verbrennung und damit zur Erhitzung und damit zur Aktivierung des Tones zugeführt werden. Hierdurch wird die Wärme nicht einfach vernichtet und an die Umgebung abgegeben, sondern dem Prozess sinnvoll wieder zugeführt.

Die thermische Aktivierung in Schritt a) kann beispielsweise in einem Calcinator, einen Drehrohrofen oder ein Wirbelbettreaktor sein. Die thermische Aktivierung kann in einer bevorzugten Ausführungsform unter reduzierenden Bedingungen erfolgen, beispielsweise durch die unterstöchiometrische Verbrennung eines Brennstoffes. Die thermische Aktivierung kann bevorzugt auch eine Vorwärmung des Tones, beispielsweise eine Zyklonkaskade, aufweisen.

Das Vermengen in Schritt b) muss keine homogene Mischung des Feststoffes und des aktivierten Tones erzeugen. Vielmehr reicht eine heterogene Mischung aus, da es in diesem Schritt nur auf eine Vereinheitlichung der Temperatur und dadurch möglichst schnelle Abkühlung des aktivierten Tones ankommt. Insbesondere, wenn es sich bei dem Feststoff um den nur abgekühlten aktivierten Ton handelt, sind beide Komponenten chemisch identisch und unterscheiden sich lediglich in der Temperatur.

Das Vermengen in Schritt b) kann beispielsweise in einer rotierenden Trommel erfolgen, bevorzugt mit statischen Mischwerkzeugen. Ebenso kann in einem statischen Mischer mit beweglichen Mischwerkzeugen erfolgen. Vorteil dieser Mischer ist es, dass vergleichsweise viel Feststoff bei vergleichsweise geringer Gasmenge vorhanden ist. Insbesondere wenn nur Feststoff zugeführt und abgeführt werden ist die zur Verfügung stehende Sauerstoffmenge gering, sodass eine Rückfärbung des farboptimierten Tones dadurch auf ein sehr geringes und üblicherweise nicht sichtbares Niveau reduziert werden kann.

In einer alternativen Ausführungsform kann auch beispielsweise ein Wirbelbettmischer eingesetzt werden. Hierbei muss jedoch als Fluidisierungsmittel ein Inertgas oder ein reduzierendes Gas eingesetzt werden.

Die Verweilzeit in dem Vermengungsbereich kann im Bereich von wenigen Sekunden, insbesondere bei sehr kleiner Partikelgröße (unter 2 mm) bis zu 20 Minuten bei großen Partikeln (12,5 mm und größer) liegen. Auch die Art der Vermischung hat naturgemäß einen Einfluss, da es nur zu einer Vergleichmäßigung der Temperatur kommen muss. Eine stärkere Durchmischung führt hierbei zu kürzeren Verweilzeiten, wobei zu starke Durchmischung durch den mechanischen Energieeintrag wieder Wärme erzeugt, die ebenfalls abtransportiert werden muss.

Auch ist es natürlich möglich, die beiden Stoffströme aus dem aktivierten Ton und dem Feststoff zunächst zusammenzufügen, gemeinsam in einen Mischer einzubringen und in dem Mischer zu vermengen und so den Wärmeübertrag zu fördern.

Ähnliches wie für die Verweilzeit gilt auch für die zweite Temperatur. Diese ist zum einen von der Partikelgröße, dass heißt der spezifischen Oberfläche der Partikel, abhängig; kleinere Partikel müssen auf eine tiefere, zweite Temperatur abgekühlt werden als größere Partikel, damit eine erneute Oxidation und damit Färbung in optisch störendem Maße an Umgebungsluft nicht mehr stattfindet. Weiterhin wird die zweite Temperatur auch von der mineralogischen Eigenschaft der aktivierten Tone, und hier speziell von der Art der farbgebenden Mineralphasen, beeinflusst.

Erfindungsgemäß wird der aktivierte Ton aus Schritt a) mit einer ersten Temperatur von 550 °C bis 1100 °C in den Schritt b) eingeführt. In einer weiteren Ausführungsform der Erfindung wird der aktivierte Ton aus Schritt a) mit einer ersten Temperatur von 600 °C bis 1000 °C, besonders bevorzugt von 650 °C bis 900 °C, ganz besonders bevorzugt von 700 °C bis 900 °C, in den Schritt b) eingeführt. Dieses entspricht dem Temperaturfenster der Aktivierung.

In einer weiteren Ausführungsform der Erfindung erfolgt die Abkühlung in Schritt b) auf eine zweite Temperatur von 400 °C bis 650 °C , bevorzugt von 450 °C bis 600 °C, besonders bevorzugt auf 500 °C bis 600 °C. So verbleibt die thermische Energie auf einem Niveau, dass in der Aktivierung, beispielsweise bei der Vorwärmung des Tones oder als vorgewärmte Luft für eine Verbrennung, sehr effizient genutzt werden kann.

Erfindungsgemäß weist der in Schritt b) zugeführte Feststoff eine Temperatur von 0 °C bis 400 °C auf. In einer weiteren Ausführungsform der Erfindung weist der in Schritt b) zugeführte Feststoff eine Temperatur von 0 °C bis 150 °C auf.

Erfindungsgemäß sind in Schritt b) der Massenstrom des Feststoffes und der Massenstrom des aktivierten Tones in einem Verhältnis von höchstens 3:1 gewählt. In einer weiteren Ausführungsform der Erfindung sind in Schritt b) der Massenstrom des Feststoffes und der Massenstrom des aktivierten Tones in einem Verhältnis von höchstens 2:1, besonders bevorzugt von höchstens 1:1, gewählt.

Erfindungsgemäß sind in Schritt b) der Massenstrom des Feststoffes und der Massenstrom des aktivierten Tones in einem Verhältnis von wenigstens 1:10 gewählt. In einer weiteren Ausführungsform der Erfindung sind in Schritt b) der Massenstrom des Feststoffes und der Massenstrom des aktivierten Tones in einem Verhältnis von wenigstens 1:4, besonders bevorzugt von wenigstens 1:2, gewählt.

In einer weiteren Ausführungsform der Erfindung wird in Schritt b) der aktivierte Ton zunächst mit einem reduzierenden Agens in Kontakt gebracht wird und anschließend mit dem Feststoff vermengt. Hierbei kann der aktivierte Ton bereits farboptimiert sein und die Zugabe eines reduzierenden Agens lediglich dazu dienen, beispielsweise in der Gasphase befindlichen Sauerstoff zu entfernen oder eine weitere farbliche Optimierung vorzunehmen. Ebenso kann der Ton unter oxidierenden Bedingungen aktiviert werden und erst in diesem Schritt farblich optimiert werden. Diese letzte Ausführungsform ist besonders bevorzugt, wenn zur Aktivierung des Ton Ersatzbrennstoffe als Energiequelle eingesetzt werden sollen. Als reduzierendes Agens wird beispielsweise und bevorzugt Kohlenmonoxid, Wasserstoff, Kohlenwasserstoff, Methanol, Ethanol oder eine Mischung hieraus ausgewählt. Kohlenwasserstoffe umfassen hierbei insbesondere auch Öl, zum Beispiel Rohöl, Heizöl, Benzin, Diesel, Naphtha, aber auch Erdgas. Methanol oder Ethanol werden besonders bevorzugt aus regenerativen Quellen eingesetzt.

In einer weiteren Ausführungsform der Erfindung wird bezogen auf den Materialfluss des aktivierten Tones zwischen dem in Kontakt bringen mit dem reduzierenden Agens und dem anschließenden Vermengen mit dem Feststoff eine Zeitdifferenz von 1 s bis 500 s, bevorzugt von 10 s bis 150 s gewählt. Diese Zeit wird um so länger gewählt, je stärker oxidiert der aktivierte Ton ist um so größer die Partikelgröße ist.

In einer weiteren Ausführungsform der Erfindung wird der Schritt b) in einer kontinuierlich betriebenem Vermengungsvorrichtung durchgeführt.

In einer alternativen Ausführungsform der Erfindung wird der Schritt b) in einer diskontinuierlich betriebenem Vermengungsvorrichtung durchgeführt, beispielsweise einem Rührkessel. Ebenfalls können solche diskontinuierlichen Vermengungsvorrichtungen in einer Kaskade hintereinander angeordnet sein.

In einer weiteren Ausführungsform der Erfindung wird der aktivierte Ton der Vermengung in Schritt b) nicht gleichzeitig zugegeben, sondern erfolgt in wenigstens zwei Punkten, die im Materialflussrichtung hintereinander angeordnet sind. Hierdurch wird zunächst eine erste kleine Menge aktivierter Ton in eine größere Menge kühlen Feststoffs gegeben und dadurch rasch abgekühlt. Die zweite Menge wird dann später in das Gemenge aus Feststoff und der ersten Menge an aktiviertem Ton geben, wobei das Gemenge gegenüber dem reinen Feststoff schon erwärmt ist. Dennoch kann auch die zweite Menge so rascher abgekühlt werden. Vorzugweise werden zwei bis zehn, besonders bevorzugt drei bis fünf Teilmengen zugegeben.

In einer weiteren Ausführungsform der Erfindung wird der Feststoff der Vermengung in Schritt b) nicht gleichzeitig zugegeben, sondern erfolgt in wenigstens zwei Punkten, die im Materialflussrichtung hintereinander angeordnet sind. Hierdurch wird zunächst eine erste kleine Menge Feststoff in eine größere Menge heißen aktivierten Tones gegeben und ein erster Kühlschritt erreicht. Die zweite Menge wird dann später in das Gemenge aus der ersten Menge Feststoff und aktiviertem Ton geben, wodurch die Durchmischung und dadurch die Abkühlung vereinfacht werden kann. Vorzugweise werden zwei bis zehn, besonders bevorzugt drei bis fünf Teilmengen zugegeben.

In einer weiteren Ausführungsform der Erfindung wird in Schritt b) Wasser zur Erzeugung eine Wasserdampfatmosphäre zugegeben. Hierbei wird die Wassermenge vorzugsweise so gering wie möglich gehalten, denn die hierfür verwendete Wärme ist für die Rückgewinnung größtenteils verloren. Die Erzeugung des Wasserdampfs dient zwei Dingen. Zum einen vertreibt der Wasserdampf umgebende Luft und stellt so eine Trennung zum Sauerstoff her. Zum anderen hat Wasserdampf eine gute Wärmekapazität, was einen Wärmeaustausch zwischen dem Feststoff und dem aktivierten Ton verbessert.

In einer weiteren Ausführungsform der Erfindung wird die Partikelgröße des aktivierten Tones und des Feststoffes kleiner 75 mm, bevorzugt kleiner 12,5 mm, besonders bevorzugt kleiner 2 mm, gewählt.

Das erfindungsgemäße Verfahren kann beispielsweise mit einer Vorrichtung zur Herstellung farboptimierter aktivierte Tone für die Zementherstellung durchgeführt werden. Die Vorrichtung weist eine Aktivierungsvorrichtung, eine Vermengungsvorrichtung und eine Wärmerückgewinnungsvorrichtung auf. Der Stoffstrom des Tones wird von der Aktivierungsvorrichtung zur Vermengungsvorrichtung zur Wärmerückgewinnungsvorrichtung geführt. Die Vorrichtung weist eine Zuführung eines Feststoffes zur Vermengungsvorrichtung auf. Durch diese Zuführung kann ein kühler Feststoff dem heißen aktivierten Ton zugeführt und wie oben beschrieben auf eine Temperatur abgekühlt werden, bei der eine Oxidation und somit eine ungewünschte Farbveränderung nicht mehr erfolgt. Die Wärmerückgewinnungsvorrichtung weist eine erste Gaszuführung und eine erste Gasabführung auf, wobei die erste Gasabführung mit der Aktivierungsvorrichtung verbunden ist. Hierdurch wird die thermische Energie nicht nutzlos an die Umgebung abgegeben, sondern über den Gasstrom dem Prozess wieder zugeführt, was letztendlich Brennstoff spart.

Die Vorrichtung wird vorzugsweise zur Durchführung des erfindungsgemäßen Verfahrens eingesetzt.

Die Wärmerückgewinnungsvorrichtung kann beispielsweise ein Rohr mit einem Abscheidezyklon sein. Diese Wärmerückgewinnungsvorrichtung kann auch kaskadiert aufgebaut sein, wie dieses für die Vorwärmer üblich ist.

Bevorzugt erfolgt die Wärmeübertragung vom Produkt, dem aktivierten Ton auf das Gas durch direkten Kontakt.

Die Vermengungsvorrichtung kann beispielsweise ein Mischer sein, beispielsweise ein Schneckenmischer oder Pflugscharmischer mit festsehendem Gehäuse beziehungsweise ein Konusmischer oder Trommelmischer mit rotierendem Gehäuse. Bevorzugt sind Mischer bevorzugt, bei denen der Feststoffanteil im Vergleich zu Gasphase groß ist. Bereits hierdurch wird eine Reduktion des zur Verfügung stehenden Sauerstoffs erreicht, selbst ohne eine Schutzgasatmosphäre vorzusehen.

In einer weiteren Ausführungsform der Erfindung weist die Vermengungsvorrichtung eine zweite Gasabführung auf, wobei die zweite Gasabführung mit der Aktivierungsvorrichtung verbunden ist. Auf diese Weise ist es möglich, Stäube aus der Vermengungsvorrichtung auszutragen. Da die Aktivierungsvorrichtung üblicherweise über eine angeschlossene Gasreinigung verfügt, kann hierdurch auf eine eigene Staubabscheidung für die Vermengungsvorrichtung verzichtet werden.

In einer weiteren Ausführungsform der Erfindung weist die Vermengungsvorrichtung eine Zuführung für ein reduzierendes Agens auf, insbesondere für ein flüssiges oder gasförmiges reduzierendes Agens.

In einer weiteren Ausführungsform der Erfindung weist die Vorrichtung eine Produktrückführung auf, wobei dem Materialstrom des aktivierten Tones nach der Wärmerückgewinnungsvorrichtung ein Teilstrom entnommen und der Zuführung eines Feststoffes zur Vermengungsvorrichtung zugeführt wird. Hierdurch erfolgt eine erste Kühlung des aktivierten Tones durch den bereits vollständig abgekühlten aktivierten Ton. Probleme der Vermischung, Dosierungsprobleme und dergleichen sind daher irrelevant.

In einer weiteren Ausführungsform der Erfindung weist die Vorrichtung eine Vorrichtung zur Vermischung des Teilstroms mit einem Zementvorstoff aus der Gruppe umfassend Zementklinker, Gips, Kalk, Schlacke, Flugasche, Tone oder einer Mischung hieraus, auf und eine Zuführung dieses Gemisches zur Vermengungsvorrichtung.

In einer weiteren Ausführungsform der Erfindung weist die Vorrichtung eine Zuführungsvorrichtung zur Vermengungsvorrichtung für einen Zementvorstoff aus der Gruppe umfassend Zementklinker, Gips, Kalk, Schlacke, Flugasche, Tone oder einer Mischung hieraus, auf.

Nachfolgend ist die erfindungsgemäße Vorrichtung und das Verfahren anhand von in den Zeichnungen dargestellten Ausführungsbeispielen näher erläutert.
- Fig. 1: erste beispielhafte Ausführungsform
- Fig. 2: zweite beispielhafte Ausführungsform
- Fig. 3: dritte beispielhafte Ausführungsform
- Fig. 4: vierte beispielhafte Ausführungsform
- Fig. 5: fünfte beispielhafte Ausführungsform
- Fig. 6: sechste beispielhafte Ausführungsform

Alle Figuren sind rein schematisch und nicht maßstabgerecht. Gleiche Bauteile sind mit gleichen Bezugszeichen versehen. Insbesondere die Aktivierungsvorrichtung 10 kann beliebig anders nach dem Stand der Technik ausgeführt sein.

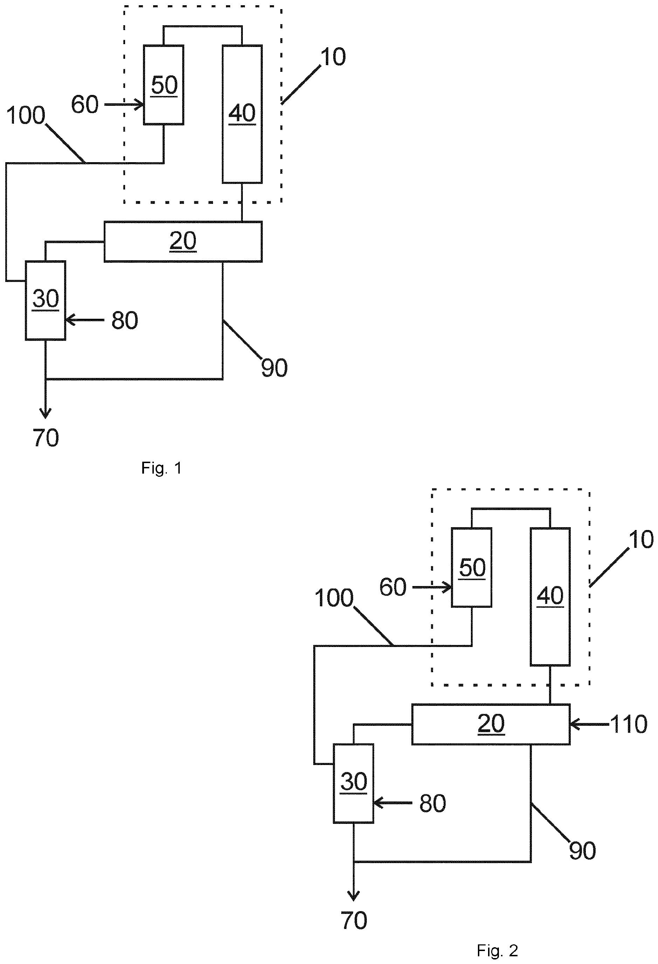

In Fig. 1 ist eine erste beispielhafte Ausführungsform einer Vorrichtung und damit des in der Vorrichtung durchgeführten Verfahrens gezeigt. Ein Edukt 60, ein zu aktivierender Ton, wird im Vorwärmer 50 erwärmt und in einem Calcinator 40 aktiviert, beispielsweise bei 900 °C. Der Vorwärmer 50 kann den zu aktivierenden Ton auch trocknen oder dem Vorwärmer 50 kann ein Trockner vorgeschaltet sein. Der aktivierte Ton gelangt dann aus der Aktivierungsvorrichtung 10 in eine Vermengungsvorrichtung 20. Dort wurde mit einem Feststoff, welcher kälter ist, vermengt. Dieser Feststoff gelang durch den Produktteilstrom 90 zur Vermengungsvorrichtung 20. In der Vermengungsvorrichtung 20 wird der aktivierte Ton abgekühlt, beispielsweise auf 600 °C. Anschließend gelangte der Produktstrom in die Wärmerückgewinnungsvorrichtung 30. Diese wird ein Gas 80 eingeleitet, welches die Wärme übernimmt und über den Gasstrom 100 in den Vorwärmer 50 geleitet wird. Hier wird die Wärme auf das Edukt 60 übergeben, sodass die thermische Energie im Prozess verbleibt. Von den in der Wärmerückgewinnungsvorrichtung 30 abgekühlten Produkt, beispielsweise auf 100 °C abgekühlt, wird ein Produktteilstrom 90 entnommen, um diesen der Vermengungsvorrichtung 20 zurückzuführen. Das restliche Produkt 70 kann gelagert oder weiterbearbeitet werden.

Das in Fig. 2 gezeigte zweite beispielhafte Ausführungsform weist zusätzlich eine Vorrichtung zur Zuführung eines reduzierenden Agens 110 in die Vermengungsvorrichtung 20 auf. Beispielsweise kann das reduzieren der Agens 110 Öl oder Wasserstoff sein. Durch den erkennbaren räumlichen Versatz zwischen der Zuführung des aktivierten Tons zur Vermengungsvorrichtung 20 und des Produktteilstroms 90 hat der aktivierte Ton zunächst auf hoher Temperatur eine kurze Zeit, beispielsweise 10 Sekunden, zur Reaktion mit dem reduzierenden Agens 110, sodass eine weitere Farboptimierung erreicht werden kann.

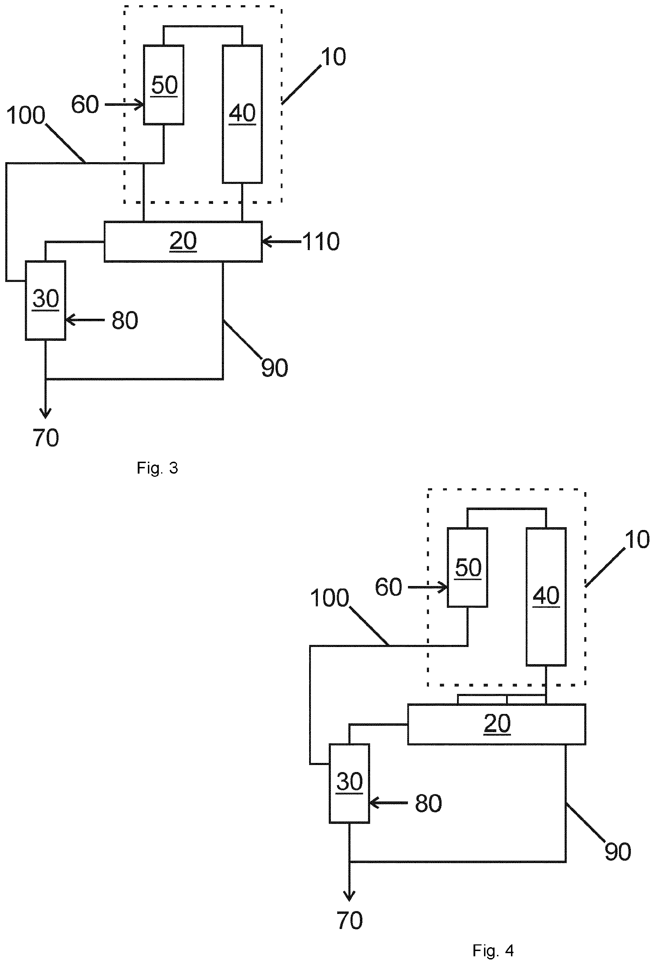

Die in der Fig. 3 gezeigte dritte beispielhafte Ausführungsform unterscheidet sich von der in Fig. 2 gezeigten zweiten beispielhaften Ausführungsform dadurch, dass eine Gasleitung von der Vermengungsvorrichtung 20 zur Aktivierungsvorrichtung 10 besteht. Über diese kann beispielsweise Staub ausgetragen werden. Da die Abluft der Aktivierungsvorrichtung 10 üblicherweise über einen Staubfilter verfügt, so kann diese auch für hier entstehende Stäube genutzt werden.

Die in Fig. 4gezeigte vierte beispielhafte Ausführungsform unterscheidet sich von der ersten beispielhaften Ausführungsform dadurch, dass der aktivierte Ton in drei Teilschritten der Vermengungsvorrichtung 20 zugeführt wird. Hierdurch wird eine schnellere Abkühlung jeder einzelnen Teilmenge des aktivierten Tones erreicht.

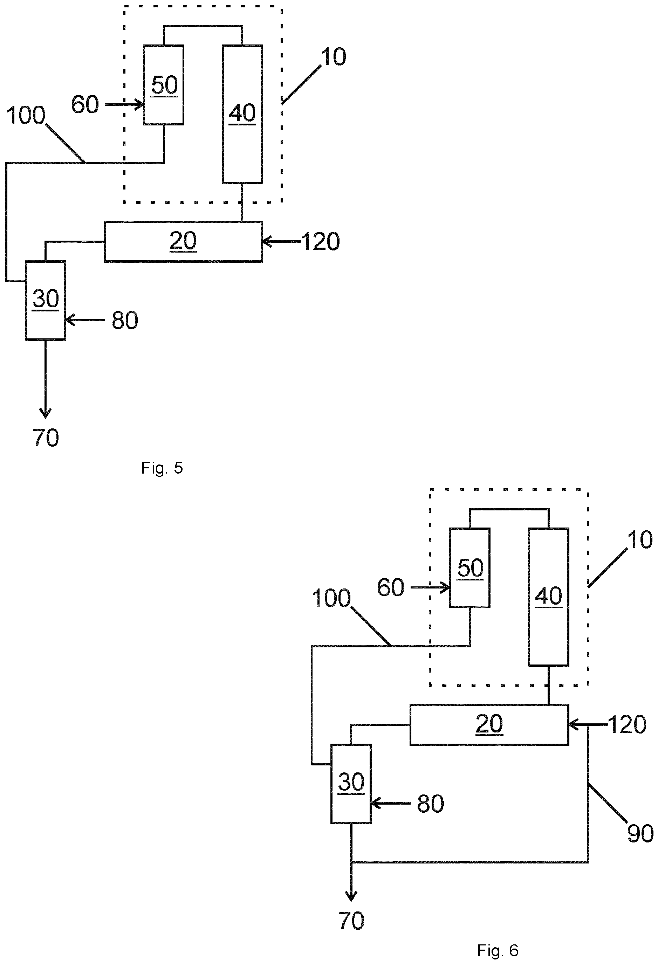

Fig. 5zeigt eine fünfte beispielhafte Ausführungsform, welche sich von der ersten beispielhaften Ausführungsform dadurch unterscheidet, dass kein Produktteilstroms 90, sondern kalter Zementklinker 120 der Verbindungsvorrichtung 20 zugeführt wird.

Fig. 6zeigt eine sechste beispielhafte Ausführungsform, welche eine Kombination der ersten beispielhaften Außenform und der fünften beispielhaften Ausführungsform darstellt. Hier werden sowohl Zementklinker 120 als auch ein Produktteilstrom 90 der Verbindungsvorrichtung 20 zugeführt. Hierbei ist es vorteilhafterweise möglich, die Zusammensetzung zwischen Zementklinker 120 und Produktgasstrom 90 zwischen 0 % Zementklinker 120 und 100 % Produktgasstrom 90 sowie 100 % Zementklinker 120 und 0 % Produktgasstrom 90 zu steuern.

### Bezugszeichen

- 10: Aktivierungsvorrichtung
- 20: Vermengungsvorrichtung
- 30: Wärmerückgewinnungsvorrichtung
- 40: Calcinator
- 50: Vorwärmer
- 60: Edukt
- 70: Produkt
- 80: Gas
- 90: Produktteilstrom
- 100: Gasstrom
- 110: reduzierendes Agens
- 120: Zementklinker

## Patentansprüche

1. Verfahren zur Herstellung farboptimierter aktivierter Tone für die Zementherstellung, wobei das Verfahren die folgenden Schritte aufweist:
a) Thermische Aktivierung des Ausgangsmaterials bei erhöhter Temperatur zu einem aktivierten Ton,
b) Abkühlen des aktivierten Tons durch Vermengen mit einem im Produkt verbleibenden Feststoff von einer ersten Temperatur auf eine zweite Temperatur,
c) Abkühlen des Gemisches aus Schritt b) von der zweiten Temperatur auf eine dritte Temperatur durch Wärmeübertrag auf einen Gasstrom,
wobei als Feststoff in Schritt b) das Produkt nach Schritt c), ein Zementvorstoff aus der Gruppe umfassend Zementklinker (110), Gips, Kalk, Schlacke, Flugasche, Tone oder einer Mischung hieraus, oder eine Kombination aus Produkt nach Schritt c) und einem Zementvorstoff eingesetzt wird, **dadurch gekennzeichnet, dass** der aktivierte Ton aus Schritt a) mit einer ersten Temperatur von 550 °C bis 1100 °C in den Schritt b) eingeführt wird, wobei der in Schritt b) zugeführte Feststoff eine Temperatur von 0 °C bis 400 °C aufweist, wobei in Schritt b) der Massenstrom des Feststoffes und der Massenstrom des aktivierten Tones in einem Verhältnis von höchstens 3:1 gewählt sind, wobei in Schritt b) der Massenstrom des Feststoffes und der Massenstrom des aktivierten Tones in einem Verhältnis von wenigstens 1:10 gewählt sind.

2. Verfahren nach Anspruch 1, **dadurch gekennzeichnet, dass** der aktivierte Ton aus Schritt a) mit einer ersten Temperatur von 600 °C bis 1000 °C, besonders bevorzugt von 650 °C bis 900 °C, ganz besonders bevorzugt von 700 °C bis 900 °C, in den Schritt b) eingeführt wird.

3. Verfahren nach einem der vorstehenden Ansprüche, **dadurch gekennzeichnet, dass** die Abkühlung in Schritt b) auf eine zweite Temperatur von 400 °C bis 650 °C, bevorzugt von 450 °C bis 600 °C, besonders bevorzugt auf 500 °C bis 600 °C, erfolgt.

4. Verfahren nach einem der vorstehenden Ansprüche, **dadurch gekennzeichnet, dass** der in Schritt b) zugeführte Feststoff eine Temperatur von 0 °C bis 150 °C aufweist.

5. Verfahren nach einem der vorstehenden Ansprüche, **dadurch gekennzeichnet, dass** in Schritt b) der Massenstrom des Feststoffes und der Massenstrom des aktivierten Tones in einem Verhältnis von höchstens 2:1, besonders bevorzugt von höchstens 1:1, gewählt sind.

6. Verfahren nach einem der vorstehenden Ansprüche, **dadurch gekennzeichnet, dass** in Schritt b) der Massenstrom des Feststoffes und der Massenstrom des aktivierten Tones in einem Verhältnis von wenigstens 1:4, besonders bevorzugt von wenigstens 1:2, gewählt sind.

7. Verfahren nach einem der vorstehenden Ansprüche, **dadurch gekennzeichnet, dass** in Schritt b) der aktivierte Ton zunächst mit einem reduzierenden Agens (110) in Kontakt gebracht wird und anschließend mit dem Feststoff vermengt wird.

8. Verfahren nach Anspruch 7, **dadurch gekennzeichnet, dass** als reduzierendes Agens (110) Kohlenmonoxid, Wasserstoff, Kohlenwasserstoff oder eine Mischung hieraus ausgewählt wird.

9. Verfahren nach Anspruch 7 oder 8, **dadurch gekennzeichnet, dass** bezogen auf den Materialfluss des aktivierten Tones zwischen dem in Kontakt bringen mit dem reduzierenden Agens (110) und dem anschließenden vermengen mit dem Feststoff eine Zeitdifferenz von 1 s bis 500 s, bevorzugt von 10 s bis 150 s gewählt wird.

10. Verfahren nach einem der vorstehenden Ansprüche, **dadurch gekennzeichnet, dass** der Schritt b) in einer kontinuierlich betriebenen Vermengungsvorrichtung (20) durchgeführt wird.

11. Verfahren nach einem der vorstehenden Ansprüche, **dadurch gekennzeichnet, dass** in Schritt b) Wasser zur Erzeugung eine Wasserdampfatmosphäre zugegeben wird.

12. Verfahren nach einem der vorstehenden Ansprüche, **dadurch gekennzeichnet, dass** die Partikelgröße des aktivierten Tones und des Feststoffes kleiner 75 mm, bevorzugt kleiner 12,5 mm, besonders bevorzugt kleiner 2 mm, gewählt wird.

## Claims

1. A process for the production of colour-optimised activated clays for cement production, the process comprising the following steps:
a) Thermal activation of the starting material at an elevated temperature to produce an activated clay,
b) Cooling of the activated clay by mixing with a solid remaining in the product from a first temperature to a second temperature,
c) Cooling the mixture from step b) from the second temperature to a third temperature by heat transfer to a gas stream,
wherein the solid used in step b) is the product according to step c), a cement pre-material from the group comprising cement clinker (110), gypsum, lime, slag, fly ash, clays or a mixture thereof, or a combination of product according to step c) and a cement pre-material, **characterised in that in that** the activated clay from step a) is introduced into step b) at a first temperature of 550°C to 1100°C, the solid material supplied in step b) having a temperature of 0°C to 400°C, the mass flow of the solid material and the mass flow of the activated clay in step b) being selected in a ratio of at most 3:1, wherein in step b) the mass flow of the solid and the mass flow of the activated clay are selected in a ratio of at least 1:10.

2. Process according to claim 1, **characterised in that** the activated clay from step a) is introduced into step b) at a first temperature of 600 °C to 1000 °C, particularly preferably from 650 °C to 900 °C, most preferably from 700 °C to 900 °C.

3. Process according to one of the preceding claims, **characterised in that** the cooling in step b) is carried out to a second temperature of 400 °C to 650 °C, preferably from 450 °C to 600 °C, particularly preferably to 500 °C to 600 °C.

4. Process according to one of the preceding claims, **characterised in that** the solid supplied in step b) has a temperature of 0 °C to 150 °C.

5. Process according to one of the preceding claims, **characterised in that** in step b) the mass flow of the solid and the mass flow of the activated clay are selected in a ratio of at most 2:1, particularly preferably of at most 1:1.

6. Process according to one of the preceding claims, **characterised in that** in step b) the mass flow of the solid and the mass flow of the activated clay are selected in a ratio of at least 1:4, particularly preferably of at least 1:2.

7. Method according to one of the preceding claims, **characterised in that** in step b) the activated clay is first brought into contact with a reducing agent (110) and then mixed with the solid.

8. The method according to claim 7, **characterised in that** carbon monoxide, hydrogen, hydrocarbon or a mixture thereof is selected as the reducing agent (110).

9. Process according to claim 7 or 8, **characterised in that** a time difference of from 1 s to 500 s, preferably from 10 s to 150 s, is selected in relation to the material flow of the activated clay between bringing it into contact with the reducing agent (110) and the subsequent mixing with the solid.

10. Method according to one of the preceding claims, **characterised in that** step b) is carried out in a continuously operated blending device (20).

11. Process according to one of the preceding claims, **characterised in that** in step b) water is added to generate a water vapour atmosphere.

12. Process according to one of the preceding claims, **characterised in that** the particle size of the activated clay and the solid is selected to be less than 75 mm, preferably less than 12.5 mm, particularly preferably less than 2 mm.

## Revendications

1. Procédé de production d'argiles activées à couleur optimisée pour la production de ciment, comprenant les étapes suivantes :
a) Activation thermique du matériau de départ à une température élevée pour produire une argile activée,
b) Refroidissement de l'argile activée par mélange avec un solide restant dans le produit, d'une première température à une seconde température,
c) Refroidir le mélange de l'étape b) de la deuxième température à une troisième température par transfert de chaleur à un flux de gaz,
où le solide utilisé à l'étape b) est le produit selon l'étape c), un pré-matériau de ciment du groupe comprenant le clinker de ciment (110), le gypse, la chaux, le laitier, les cendres volantes, les argiles ou un mélange de ceux-ci, ou une combinaison du produit selon l'étape c) et d'un pré-matériau de ciment, **caractérisé par le fait que** l'argile activée de l'étape a) est introduite dans l'étape b) à une première température de 550°C à 1100°C, le matériau solide fourni dans l'étape b) ayant une température de 0°C à 400°C, le débit massique du matériau solide et le débit massique de l'argile activée dans l'étape b) étant choisis dans un rapport d'au plus 3:1, dans lequel, à l'étape b), le débit massique du matériau solide et le débit massique de l'argile activée sont choisis dans un rapport d'au moins 1:10.

2. Procédé selon la revendication 1, **caractérisé par le fait que** l'argile activée de l'étape a) est introduite dans l'étape b) à une première température de 600 °C à 1000 °C, de préférence de 650 °C à 900 °C, de préférence encore de 700 °C à 900 °C.

3. Procédé selon l'une des revendications précédentes, **caractérisé par le fait que** le refroidissement à l'étape b) est effectué à une seconde température de 400 °C à 650 °C, de préférence de 450 °C à 600 °C, de préférence encore de 500 °C à 600 °C.

4. Procédé selon l'une des revendications précédentes, **caractérisé par le fait que** le solide fourni à l'étape b) a une température de 0 °C à 150 °C.

5. Procédé selon l'une des revendications précédentes, **caractérisé par le fait qu'à** l'étape b), le débit massique du solide et le débit massique de l'argile activée sont choisis dans un rapport d'au plus 2:1, de préférence d'au plus 1:1.

6. Procédé selon l'une des revendications précédentes, **caractérisé par le fait qu'à** l'étape b), le débit massique du solide et le débit massique de l'argile activée sont choisis dans un rapport d'au moins 1:4, de préférence d'au moins 1:2.

7. Procédé selon l'une des revendications précédentes, **caractérisé par le fait qu'à** l'étape b), l'argile activée est d'abord mise en contact avec un agent réducteur (110), puis mélangée au solide.

8. Méthode selon la revendication 7, **caractérisée par le fait que le** monoxyde de carbone, l'hydrogène, l'hydrocarbure ou un mélange de ceux-ci est choisi comme agent réducteur (110).

9. Procédé selon la revendication 7 ou 8, **caractérisé par le fait qu'**une différence de temps de 1 s à 500 s, de préférence de 10 s à 150 s, est sélectionnée par rapport au flux de matière de l'argile activée entre sa mise en contact avec l'agent réducteur (110) et le mélange ultérieur avec le solide.

10. Procédé selon l'une des revendications précédentes, **caractérisé par le fait que** l'étape b) est effectuée dans un dispositif de mélange en continu (20).

11. Procédé selon l'une des revendications précédentes, **caractérisé par le fait qu'à** l'étape b) de l'eau est ajoutée pour générer une atmosphère de vapeur d'eau.

12. Procédé selon l'une des revendications précédentes, **caractérisé par le fait que la** taille des particules de l'argile activée et du solide est choisie pour être inférieure à 75 mm, de préférence inférieure à 12,5 mm, de préférence encore inférieure à 2 mm.
